# EUROPÄISCHE PATENTSCHRIFT

(11) **EP 3 530 894 B1**
(45) Veröffentlichungstag und Bekanntmachung des Hinweises auf die Patenterteilung: **22.12.2021**
(21) Anmeldenummer: 19151067.6
(22) Anmeldetag: 10.01.2019
(51) Int. Cl.: F01M 11/04, F16N 37/00, B60K 15/04

(54) **VERSCHLUSSKAPPE MIT VERRIEGELUNGSANZEIGE FÜR EINEN ÖLEINFÜLLSTUTZEN**
CLOSURE CAP WITH LOCK INDICATOR FOR AN OIL FILL NOZZLE
BOUCHON DE FERMETURE AYANT UN INDICATEUR DE VERROUILLAGE POUR UNE TUBULURE DE REMPLISSAGE D'HUILE

(30) Priorität: 06.02.2018 DE 102018201777
(43) Veröffentlichungstag der Anmeldung: 28.08.2019
(73) Patentinhaber: ZF Friedrichshafen AG, 88046 Friedrichshafen (DE)
(72) Erfinder: Kühne, Martin, 34479 Breuna (DE); Dilk, Gerhard, 66583 Spiesen-Elversberg (DE); Litzba, Jörg, 34233 Fuldatal (DE)
(74) Vertreter: ZF Friedrichshafen AG

(56) Entgegenhaltungen:
- DE-U1- 20 308 736
- US-A- 2 844 274
- US-A- 3 091 356
- US-A1- 2013 014 853

## Beschreibung

Die Erfindung betrifft einen Einfüllstutzen mit einer Verschlusskappe, insbesondere einen Öleinfüllstutzen mit Verriegelungsanzeige.

Ein Getriebe eines Fahrzeugs oder eines Luftfahrzeugs umfasst eine Verschlusskappe für einen Öleinfüllstutzen, die beim Befüllen des Getriebes mit einem Fluid, wie bspw. Öl nicht verriegelt ist, der Öleinfüllstutzen also geöffnet ist. Nach dem Befüllen des Getriebes wird der Öleinfüllstutzen mit der Verschlusskappe verschlossen, sodass die Verschlusskappe in einem verriegelten Zustand vorliegt.

Bei Fahrzeugen oder Luftfahrzeugen, wie insbesondere einem Hubschrauber kann es bisweilen schwierig werden, zu unterscheiden, ob die Verschlusskappe verriegelt oder nicht verriegelt ist. So kann es passieren, dass der Nutzer, der bspw. Öl nachfüllt, den Öleinfüllstutzen nicht korrekt mit der Verschlusskappe schließt. Bei nicht oder nur teilweiser Verriegelung kann es im Betrieb bspw. durch Vibrationen, etc. dazu kommen, dass sich die Verschlusskappe von dem Öleinfüllstutzen löst und es bspw. so zu Ölaustritt kommt oder dass unerwünschte Drittstoffe in den Tank eindringen.

Aus der DE 203 08 736 U1 ist ein Deckel mit einem hutförmigen Handgriffteil bekannt, das über ein Eingriffteil gestülpt ist. Zum Eindrehen des Deckels 1 in einen zu verschließenden Stutzen kann eine auf das Handgriffteil aufgeprägte Drehbewegung über Mitnehmer auf ein Rastgehäuse übertragen werden. Ein Rastfinger überträgt diese Drehbewegung über eine Rastausnehmung auf eine Unterschale und damit auf das Eingriffteil. Der Deckel umfasst weiterhin einen zylindrischen Anzeigefinger. Bei einer Relativbewegung zwischen Handgriffteil und Eingriffteil drehen die Mitnehmer einen mit dem Anzeigefinger verbundenen Außenring. Dadurch wird der Anzeigefinger angehoben, sodass er soweit in eine Anzeigeöffnung einfährt, dass seine Stirnseite bündig mit der Außenseite eines Stegs zu liegen kommt. Dadurch erhält eine Bedienungsperson neben dem Klickgeräusch eine optische Anzeige, die ihn darüber informiert, dass der Deckel hinreichend in den Stutzen eingedreht worden ist.

Die US 2,844,274 offenbart einen Adapter dessen Öffnung mittels eines Deckels verschlossen werden kann. Der Tankdeckel umfasst einen Deckelkörper und ein operierendes Teil in der Form eines Bolzens. Der Bolzen stellt ein Mittel zum visuellen Anzeigen des Zustands des Deckels dar, sodass ein Bediener ohne eine Manipulation des Deckels und vorzugsweise durch eine beiläufige Überprüfung aus einer Entfernung feststellen kann, in welchem Zustand sich der Deckel befindet.

Aufgabe der vorliegenden Erfindung ist es eine Verschlusskappe bereitzustellen, die dem Nutzer das korrekte Verriegeln der Verschlusskappe anzeigt.

Diese Aufgabe wird durch die Merkmale des Anspruchs 1 gelöst.

Vorteilhafte Ausgestaltungen der Erfindung ergeben sich durch die Unteransprüche.

Die Erfindung geht aus von einer Verschlusskappe für einen Einfüllstutzen, insbesondere für einen Öleinfüllstutzen eines Getriebes, insbesondere eines Hubschraubergetriebes.

Erfindungsgemäß umfasst die Verriegelungsanzeige der Verschlusskappe ein Anzeigeelement. Das Anzeigeelement ist unter Aufbringung einer von einem Nutzer zugeführten Kraft gegen die Kraft eines Federelements von einer ersten Position in eine zweite Position überführbar und mit der Kraft des Federelements von der zweiten Position in die erste Position überführbar. Das Anzeigeelement zeigt in einer der beiden Positionen einen verriegelten Zustand und in der anderen der beiden Positionen einen nicht verriegelten Zustand der Verschlusskappe an. Zudem ist ein Mechanismus vorgesehen, der das Anzeigeelement in der verriegelten Position der Verschlusskappe sichert.

Die Verschlusskappe kann bspw. mittels eines Bajonettverschlusses mit einem Gehäuse des Öleinfüllstutzens verbunden werden. Zur Sicherung der Verbindung kann bspw. eine Raste verwendet werden. Ein Bajonettverschluss ist eine mechanische Verbindung der im Wesentlichen zylindrisch vorliegenden Verschlusskappe und des Gehäuses in ihrer Längsachse. Die beiden Teile werden durch Ineinanderstecken und entgegengesetztes Drehen (Steck-Dreh-Bewegung) verbunden und so auch wieder getrennt. Der Vorteil gegenüber einem Gewinde ist der, dass die Bajonettverbindung schnell herstellbar und lösbar ist.

Die Überführung von der ersten Position in die zweite Position erfolgt gegen die Kraft des Federelements. Die Überführung von der zweiten in die erste Position erfolgt mit der Kraft des Federelements. Das Federelement kann bspw. als eine Schraubenzugoder -druckfeder vorliegen.

Durch das Einstecken und Eindrehen der Verschlusskappe in bspw. ein korrespondierendes Gehäuse des Öleinfüllstutzens kann die Kraft des Nutzers zugleich auf das federgelagerte Anzeigeelement ausgeübt und damit gegen die Kraft des ersten Federelements. Dies erlaubt eine konstruktiv einfache Ausführung. Hierbei sind insbesondere Schraubendruckfedern geeignet.

So wird dem Nutzer optisch und haptisch angezeigt, ob der Tankverschluss korrekt oder inkorrekt positioniert ist. Dies gelingt insbesondere dann sehr gut, wenn das Anzeigeelement in der zweiten Position bspw. in einer Bohrung versenkt ist, das Anzeigeelement also an einem Ende mit seiner Umgebung eben ist. In der ersten Position ragt das Anzeigeelement mittels der Feder gedrückt aus der Bohrung heraus.

Der Nutzer ist hierbei insbesondere nicht auf den Vergleich mehrerer Farben oder Markierungen angewiesen, die eine korrektes Verriegeln anzeigen könnten. Der Nutzer erkennt und/oder fühlt das in der Bohrung versenkte oder das sich aus dieser Bohrung herausragende oder erstreckende Anzeigeelement. Zusätzlich kann das Anzeigeelement farblich hervorgehoben sein.

So ist es insbesondere bevorzugt, wenn das Anzeigeelement und das Federelement zumindest teilweise innerhalb eines zylinderförmigen Abschnitts der Verschlusskappe geführt sind, wobei der zylinderförmige Abschnitt einen Durchbruch aufweist, durch den ein mit dem Anzeigeelement wirkverbundenes Führungselement ragt, wobei das Führungselement ausgebildet ist, in einen an einer Außenseite einer Gehäusewandung des Öleinfüllstutzens angeordneten Führungsabschnitt zu greifen.

Durch die Führung in der Bohrung bzw. in dem zylinderförmigen Abschnitt wird u.a. verhindert, dass Endwindungen bspw. der Schraubendruckfeder bei Belastung kippen, sodass die Kraft auch nicht mittig eingeleitet werden muss.

Das erste Führungselement kann bspw. als ein Knopf, (Halte-/Tast-) Stift oder dergleichen ausgebildet sein, dass sich in der Regel in radialer Richtung der im Wesentlichen zylindrischen Verschlusskappe erstreckt, d.h. im Wesentlichen senkrecht zur Steckrichtung. Der erste Führungsabschnitt kann bspw. als ein (Führungs-/Längs-) Schlitz, eine Nut oder dergleichen vorliegen, an dessen Ende sich rechtwinklig ein kürzerer Querschlitz ansetzt. Der Haltestift kann in den Längsschlitz eingeführt werden und so die Verbindung bewirken. Diese Verbindungsart entspricht im Wesentlichen ebenfalls der des vorstehend beschriebenen Bajonettverschlusses.

Das Führungselement ist mit dem Anzeigeelement wirkverbunden und greift zur Führung des Anzeigeelements in einen an einer Gehäusewandung des Öleinfüllstutzens angeordneten Führungsabschnitt. Entlang dieses Führungsabschnitts kann das Führungselement geführt werden und damit das Anzeigeelement mit oder gegen die Federkraft des ersten Federelements zwischen den zwei Positionen bewegen.

Bevorzugt ist es, wenn das Anzeigeelement in der zweiten Position, d.h. wenn das Anzeigeelement in der Bohrung bzw. im zylinderförmigen Abschnitt versenkt ist, den verschlossenen oder verriegelten Zustand und in der ersten Position, d.h. wenn das Anzeigeelement aus der Bohrung herausragt, den offenen Zustand der Verschlusskappe anzeigt.

Darüber hinaus ist es bevorzugt, wenn das Anzeigeelement mit einem ersten Bauteil verbunden ist, der das Führungselement der Verschlusskappe teilweise aufnimmt. So lassen sich die Kräfte des Nutzers besser übertragen. Das erste Bauteil wird bevorzugt in der Bohrung bzw. im zylinderförmigen Abschnitt geführt.

Weiterhin ist es bevorzugt, wenn das Federelement axial zwischen einer Anlagefläche des Anzeigeelements und dem Führungselement angeordnet ist. Ebenso ist es bevorzugt, wenn das Federelement zumindest teilweise radial zwischen dem Anzeigenelement und dem ersten Bauteil angeordnet ist. Darüber hinaus ist es bevorzugt, wenn der zylinderförmige Abschnitt eine Bohrung mit zwei vertieften, planen Absätzen aufweist, wobei ein erster Absatz einen kleineren Durchmesser als ein zweiter Absatz aufweist, wobei das Federelement auf dem ersten Absatz abgestützt ist. So lässt sich eine besonders kompakte Verriegelungsanzeige realisieren.

Schließlich ist es bevorzugt, wenn das Anzeigeelement und das erste Bauteil mittels einer Schraubverbindung verbunden sind. Schraubverbindungen sind preiswert und erleichtern den Austausch von Teilen bspw. bei Wartung und Instandsetzung.

Ein weiterer Aspekt betrifft ein einen Öleinfüllstutzen umfassend ein Gehäuse und eine Verschlusskappe, wobei die Verschlusskappe zumindest eines der vorstehend genannten Merkmale aufweist.

Die vorstehend genannten Vorteile für eine Verschlusskappe gelten sinngemäß auch für den Öleinfüllstutzen mit dieser Verschlusskappe.

Die Erfindung wird anhand der nachfolgenden Figuren näher erläutert. Es zeigen
- Fig. 1: ein Verschlusssystem einer erfindungsgemäßen Verschlusskappe für ein Gehäuse eines Öleinfüllstutzens in zwei Ansichten;
- Fig. 2: eine weitere Variante eines Verschlusssystems einer erfindungsgemäßen Verschlusskappe für ein Gehäuse eines Öleinfüllstutzens in einem Querschnitt;
- Fig. 3: eine erfindungsgemäße Verschlusskappe in einer bevorzugten Ausführungsform in einem nicht verriegelten Zustand in zwei Ansichten
- Fig. 4: eine erfindungsgemäße Verschlusskappe in einer bevorzugten Ausführungsform in einem verriegelten Zustand in zwei Ansichten
- Fig. 5: eine erfindungsgemäße Verschlusskappe in einer bevorzugten Ausführungsform in einem halb offenen Zustand in zwei Ansichten;
- Fig. 6a: die Verschlusskappe aus Fig. 1 bis 3 in einem verriegelten Zustand in einer weiteren Ansicht;
- Fig. 6b: die Verschlusskappe aus Fig. 1 bis 3 in einem nicht verriegelten Zustand in einer weiteren Ansicht; und
- Fig. 7: die Verriegelungsanzeige der Verschlusskappe aus Fig. 2 und 3 in einer Explosionsansicht.

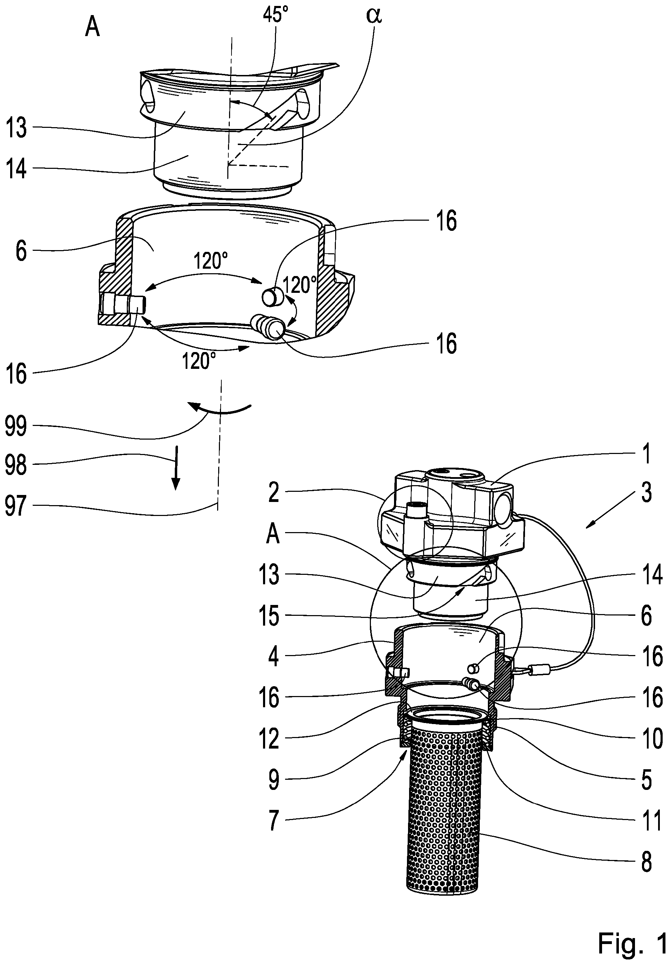

Fig. 1 zeigt in seinem unteren Bild eine Verschlusskappe 1 mit einer Verriegelungsanzeige 2 gemäß der Erfindung in einer bevorzugten Ausführung. Die Verschlusskappe 1 ist zum Verriegeln und Öffnen eines Öleinfüllstutzens 3 eines nicht näher dargestellten Getriebes eines Hubschraubers konfiguriert. In seinem oberen Bild zeigt Fig. 1 einen vergrößerten Abschnitt A eines bevorzugten Verschlusssystems, mit welchem die Verschlusskappe 1 mit einem zur Verschlusskappe 1 korrespondierenden Gehäuse 4 des Öleinfüllstutzens 3 in Form eines Bajonettverschlusses lösbar verbunden wird.

Anhand der Fig. 1 soll zunächst die Verbindung zwischen Verschlusskappe 1 und Gehäuse 4 des Öleinfüllstutzens 3 erläutert werden. Das hülsenförmige Gehäuse 4 des Öleinfüllstutzens 3 ist mittels einem Außengewinde 5 in ein nicht dargestelltes Getriebegehäuse des Getriebes eingeschraubt. Das Gewinde 5 ist in einem unteren Drittel des Gehäuses 4 angeordnet. Das Gehäuse 4 weist eine obere Öffnung 6 und eine untere Öffnung 7 auf. Die obere Öffnung 6 kann die Verschlusskappe 1 zum Verriegeln aufnehmen.

Innerhalb des Gehäuses 4 ist ein Ölsieb 8, auch oil strainer genannt, an einem zweiten Federelement 9 beweglich gelagert. Das Ölsieb 8 ist durch die untere Öffnung 7 des Gehäuses 4 geführt und führt in den Ölsumpf des Getriebes. Das zweite Federelement 9 ist als eine Schraubendruckfeder ausgeführt. Auf Höhe des Gewindes 5 weist das Gehäuse 4 einen nach radial innen gerichteten und umlaufenden ersten Vorsprung 10 auf. An einem unteren axialen Ende weist das Gehäuse einen nach radial innen gerichteten zweiten Vorsprung 11 auf. Die zweite Feder 9 ist radial zwischen Gehäuse 4 und Ölsieb 8 angeordnet und axial zwischen dem zweiten Vorsprung 11, auf dem es aufliegt, und dem ersten Vorsprung 10 angeordnet, wobei ein axial oberes Ende der zweiten Feder 9 axial unterhalb eines tellerrandähnlichen Abschlusses 12 des oberen Endes des Ölsiebs 8 anliegt. Da es sich um eine Schraubendruckfeder handelt, drückt die zweite Feder 9 das Ölsieb 8 gegen den ersten Vorsprung 10. Das Ölsieb 8 ist also innerhalb der zwei Vorsprünge 10, 11 gegen die Kraft der zweiten Feder 9 nach unten bewegbar und mit der Kraft der zweiten Feder 9 nach oben bewegbar.

Die Verschlusskappe 1 weist einen ringförmigen ersten Abschnitt 13 und einen ringförmigen zweiten Abschnitt 14 auf. Die beiden Abschnitte 13, 14 sind koaxial zueinander angeordnet und in axialer Richtung zueinander beabstandet, wobei der erste Abschnitt 13 einen größeren Außendurchmesser aufweist als der zweite Abschnitt 14. Beide Abschnitte 13, 14 greifen zum Verriegeln der Verschlusskappe 1 in die obere Öffnung 6 ein.

Der vorliegend bevorzugte Bajonettverschluss weist am ersten Abschnitt 13 der Verschlusskappe 1 zweite Führungsabschnitte 15 auf, die als Schlitze ausgebildet sind, und an einer Innenwandung des hülsenförmigen Gehäuses 4 drei dazu korrespondierende als Stifte ausgeführte zweite Führungselemente 16 auf. Die drei Stifte 16 sind jeweils in einem Abstand von 120° in Umfangsrichtung versetzt angeordnet. Die drei Schlitze 15 verlaufen ausgehend von einem unteren Ende des Abschnitts 13 in einem Winkel von α=45° zu einer Steckrichtung 98 und enden jeweils mit einem dazu verlaufenden Querschlitz, der zugleich als Raste dient.

Soll der Öleinfüllstutzen 3 geschlossen werden, so wird zunächst der erste und zweite Abschnitt 13, 14 der Verschlusskappe 1 in das Gehäuse 4 eingesetzt. Nun wird die Verschlusskappe 1 solange um die Längsachse 97 in Drehrichtung 99 gedreht, bis die Stifte 16 in die Schlitze 15 eingreifen. Unter Aufbringung einer Kraft drückt und dreht der Nutzer die Verschlusskappe 1 gegen die Kraft der zweiten Feder 9, bis die drei Stifte 16 in einer Endstellung der Verschlusskappe 1 in den Querschlitzen mit bzw. gegen die Federkraft einrasten.

Zum Entriegeln der Verschlusskappe 1 drückt der Nutzer zunächst die Verschlusskappe 1 gegen die Federkraft der zweiten Feder 9, sodass die Stifte 15 aus der Raste gedrückt werden. Anschließend dreht der Nutzer die Verschlusskappe 1 entgegen der Drehrichtung 99 und führt die Verschlusskappe 1 mit der Federkraft der zweiten Feder 9 gegen die Steckrichtung 98 aus der oberen Öffnung 6 heraus.

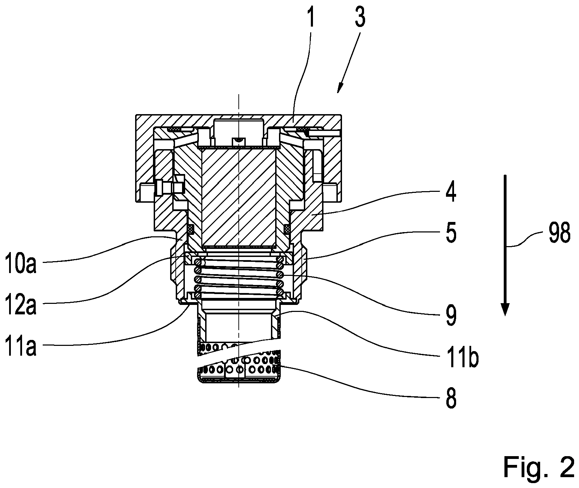

Eine andere denkbare Variante ist in Fig. 2 dargestellt. So kann bspw. das Ölsieb 8 fest im Getriebegehäuse angeordnet sein. Das untere Ende des Gehäuses 4 sitzt auf einem als ein hülsenförmig ausgeführtes Bauteil 11a mit Bund 11b auf. Das untere Ende der Hülse 11a ist in die obere Öffnung des Ölsiebs 8 eingeführt.

In seinem Querschnitt weist der Bund ein auf dem Kopf liegendes T-Profil auf. Das untere Ende des Gehäuses liegt dabei auf dem radial äußeren Schenkel des T-Profils auf. Die Feder 9 hingegen liegt auf dem radial inneren Schenkel des T-Profils auf. Das umlaufende T-Profil hält das untere Ende der Feder 9 radial in Position.

Auf dem oberen Ende der Feder 9 ist ein als eine Scheibe 12a ausgeführtes Anpresselement aufgesetzt. Der Außendurchmesser des Rings ist dabei etwas kleiner als der Innendurchmesser des unteren Drittels des Gehäuses 4. Am oberen Ende des unteren Drittels weist das Gehäuse 4 einen radial nach innen gerichteten und umlaufenden Vorsprung 10a auf, dessen Innendurchmesser kleiner als der Außendurchmesser der Scheibe 12a ist.

In einem nicht verriegelten Zustand drückt die auf dem Bund 11a abgestützte Feder 9 die Scheibe 12a gegen den Vorsprung 10a nach oben. In einem verriegelten Zustand drückt die Verschlusskappe 1 mit ihrem Abschnitt 14 von oben auf die Scheibe 12a und bewegt dadurch die Feder 9 in Steckrichtung 98 nach unten. Die Scheibe 12a erstreckt sich an ihrem äußeren radialen Ende zudem in axiale Richtung nach unten, um die Feder 9 radial zu stabilisieren.

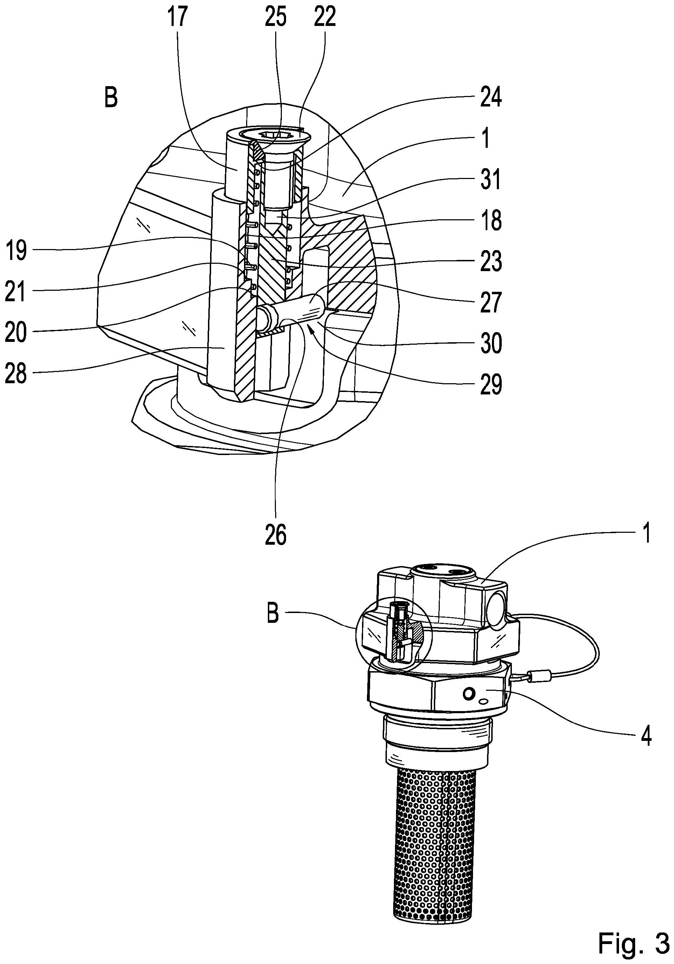

Fig. 3 zeigt in seinem unteren Bild die Verschlusskappe 1 aus Fig. 1 mit einer Verriegelungsanzeige 2 gemäß der Erfindung in einer bevorzugten Ausführung. Die Verschlusskappe 1 ist in die obere Öffnung 6 eingeführt, liegt jedoch noch nicht in einem verriegelten Zustand vor. In dem oberen Bild der Fig. 3 ist ein vergrößerter Ausschnitt B der Verriegelungsanzeige dargestellt, auf die nun näher eingegangen wird.

Die Verriegelungsanzeige 2 umfasst ein hülsenförmiges Anzeigeelement 17 das in einer Bohrung 18 geführt ist und an einem ersten Federelement 19 gelagert ist. Die Bohrung 18 umfasst 2 vertiefte, plane Absätze, nämlich einen ersten Absatz 20 und einen zweiten Absatz 21. Diese Absätze können mittels Planeinsenken hergestellt werden. Ebenfalls denkbar sind unterschiedlich tiefe Bohrungen mit drei unterschiedlich großen Durchmessern. Der erste Absatz 20 ist axial unterhalb des zweiten Absatzes 21 angeordnet und weist einen kleineren Durchmesser auf als der zweite Absatz 21. Das untere Ende des ersten Federelements 19 ist auf dem ersten Absatz 20 abgestützt.

Das Anzeigeelement 17 ist mittels einer Schraube 22 mit einem Bauteil 23 verbunden. Das Bauteil 23 liegt im Wesentlichen als ein runder Vollkörper vor. Das Bauteil 23 weist an seinem oberen Ende ein Sackloch 31 auf. Das Bauteil 23 ist längs durch die Feder 19 geführt, sodass die Feder 19 das Bauteil 23 schraubenförmig umläuft. Die erste Feder 19 kommt mit ihrem oberen Ende an einer Anlagefläche 24 des Anzeigeelements 17 in Anlage. In einem verriegelten Zustand kann ein unteres Ende des Anzeigeelements 17 auf dem zweiten Absatz 21 in Anlage kommen. Idealerweise ist zwischen unterem Ende des Anzeigeelements 17 und dem zweiten Absatz 21 etwas Spiel, um die Abnutzung oder eine Bruchgefahr zu verringern.

Das Anzeigeelement 17 ist koaxial zur Feder 19 und zum Bauteil 23 angeordnet und umschließt zu Teilen die erste Feder 19 und das Bauteil 23. Die Feder 19 ist, wie bereits erwähnt, koaxial zum Bauteil 23 angeordnet. Um die Kraft des Schraubenkopfes auf eine größere Fläche zu verteilen ist eine Kegelscheibe 25 vorgesehen, die auf die Rückseite der Anlagefläche 24 aufgesetzt ist. An seinem unteren Ende weist das Bauteil 23 eine quer zur Bohrung 18 verlaufende zweite Bohrung 26 auf. In dieser Bohrung 26 ist ein erstes Führungselement 27 aufgenommen, das als ein Stift ausgeführt ist.

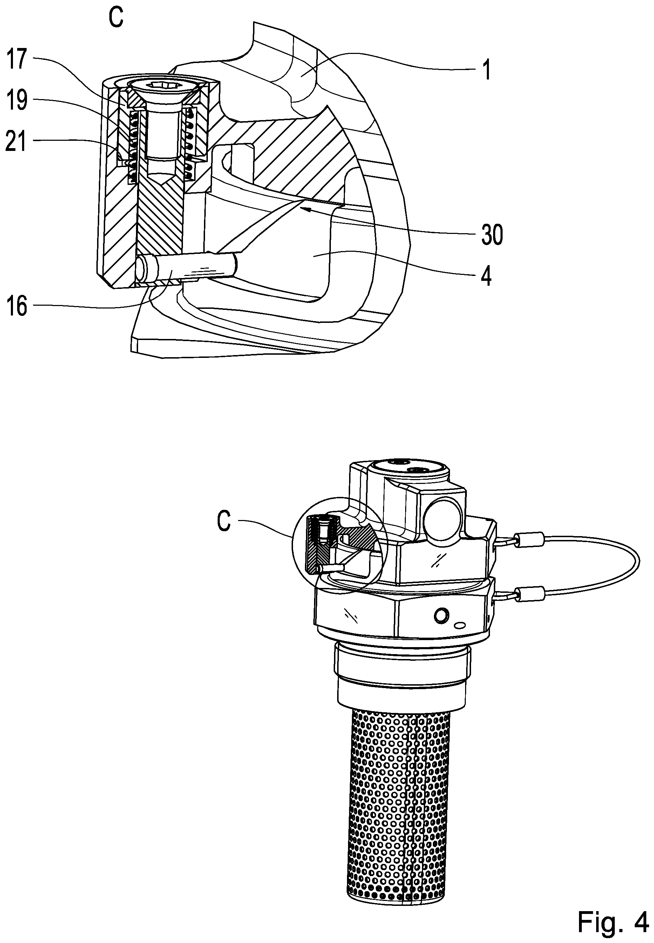

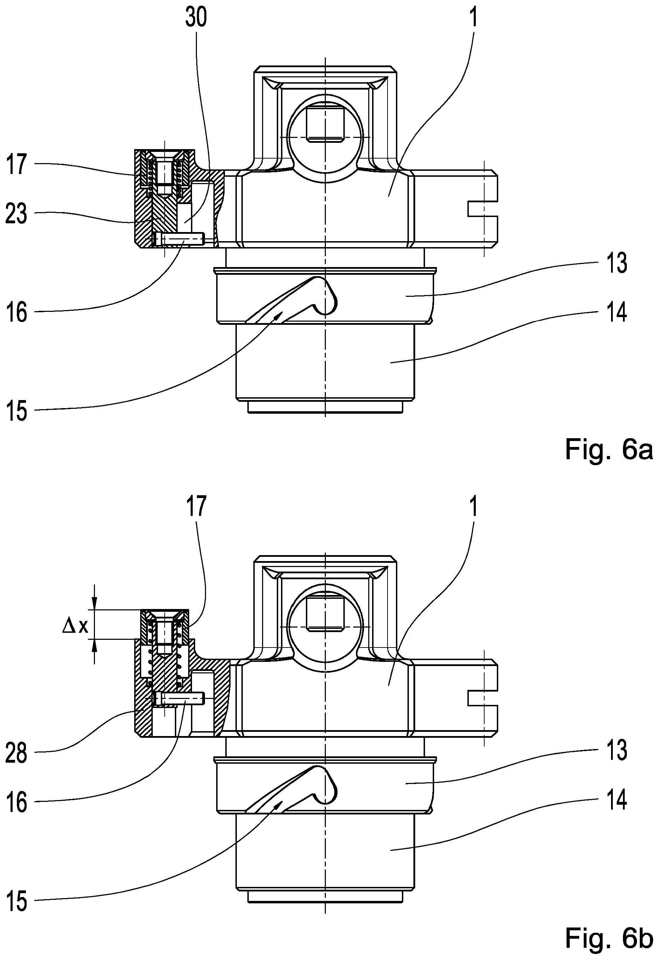

Die vorstehend erläuterten Elemente sind in einem zylinderförmigen zweiten Bauteil 28 angeordnet. Dieses Bauteil 28 ist mit der Verschlusskappe verbunden und zum ersten und zweiten Abschnitt 13, 14 radial beabstandet. Ist die Verschlusskappe 1 in die obere Öffnung 6 eingeführt, so befindet sich das Bauteil 28 radial außerhalb des Gehäuses 4, wie deutlich in Fig. 4, Fig. 6b, 6c erkennbar ist.

Das Bauteil 28 weist ferner einen seitlichen Durchbruch 29 auf, welcher radial zur Verschlusskappe gerichtet ist. Der Stift 17, der im Bauteil 23 gelagert ist, erstreckt sich radial durch diesen Durchbruch 29, sodass er in als Führungsschlitze ausgebildete erste Führungsabschnitte 30 eingreifen kann. Die Führungsschlitze 30 sind an einer Außenwandung des Gehäuses 4 angeordnet. Sie verlaufen parallel zur Steckrichtung 98 und schließen ebenfalls mit einem Querschlitz ab. Dieses Verschlusssystem funktioniert demnach im Wesentlichen wie ein Bajonettverschluss.

Die beiden Bajonettverschlüsse korrespondieren zueinander. Wird die Verschlusskappe in die obere Öffnung 6 eingesetzt und wie in Fig. 1 erläutert durch eine Steck-Dreh-Bewegung verriegelt, so wird das aus einer oberen Öffnung des Bauteils 28 axial hervorragende Anzeigeelement 17 mittels dem Stift 16, der im Schlitz 30 geführt ist, gegen die erste Federkraft in die erste Bohrung 18 gezogen, sodass das obere Ende des Anzeigeelements 17 bzw. der Kegelscheibe 25 plan mit der Umgebung anliegt. In der Endlage rasten sowohl die Stifte 16 als auch der Stift 27 mit bzw. gegen die jeweilige Federkraft ein.

Die beiden Federn 9, 19 sind zueinander parallel geschaltet. Die Federn 9, 19 wirken also nebeneinander, d.h. die vom Nutzer aufzuwendende Kraft verteilt sich, es entsteht im Prinzip eine stärkere oder härtere Ersatzfeder.

Fig. 4 zeigt im Gegensatz dazu den verriegelten Zustand der Verschlusskappe 1. In dem oberen Bild der Fig. 4 ist ein vergrößerter Ausschnitt C der Verriegelungsanzeige dargestellt. Wie in Fig. 4 zu erkennen ist, liegt das untere Ende des Anzeigeelements 17 trotz des verriegelten Zustands nicht auf dem zweiten Absatz 21 auf. Gut zu erkennen ist, dass die erste Feder 19 im verriegelten Zustand zusammengedrückt ist. Der Stift 16 ist in dieser Position eingerastet.

Die in Fig. 3 dargestellte Position des Anzeigeelements 17 entspricht einer ersten Position. Die in Fig. 4 dargestellte Position des Anzeigeelements 17 entspricht einer zweiten Position.

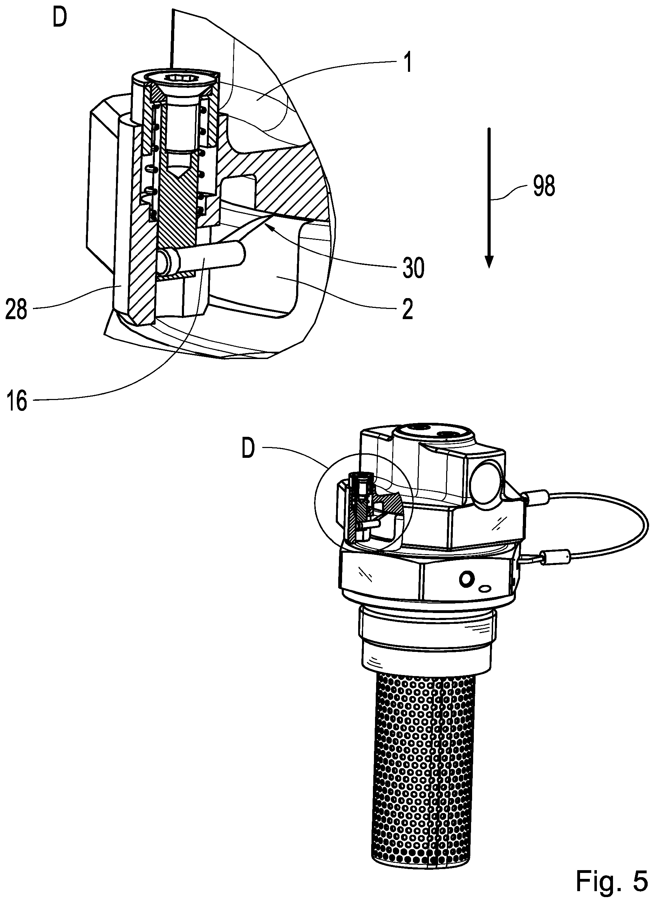

Fig. 5 zeigt das Anzeigeelement in einer halb offenen Position, die zwischen der ersten und der zweiten Position liegt, was u.a. daran zu erkennen ist, dass der Stift 16, in Steckrichtung 98 betrachtet, zwischen der durch das Bauteil 28 verdeckten Rastierung und einer Öffnung des Führungsschlitzes 30 ist. In dieser Position kann die Verschlusskappe nicht abgezogen werden.

Fig. 6a und 6b zeigen in einer schematischen Seitenansicht den Verriegelungszustand der Verschlusskappe. Fig. 6a zeigt die Verschlusskappe in einem verriegelten Zustand, was daran zu erkennen ist, dass das Anzeigeelement 17 in der Bohrung "versenkt" ist. Der Stift 16, der über das Bauteil 23 mit dem Anzeigeelement verbunden ist, ist im Schlitz 30 mit bzw. gegen die erste Federkraft eingerastet und hält dadurch das Anzeigeelement 17 gegen die Federkraft in der zweiten Position.

Fig. 6b zeigt den nicht verriegelten Zustand. Der Stift 16 wurde aus seiner Rastierung herausgedrückt und mit der Federkraft geführt. Die Feder 19 hat das Anzeigeelement 17 aus der oberen Öffnung des zweiten Bauteils 28 um einen Betrag ΔX gedrückt. Es ist nun deutlich erkennbar und/oder fühlbar.

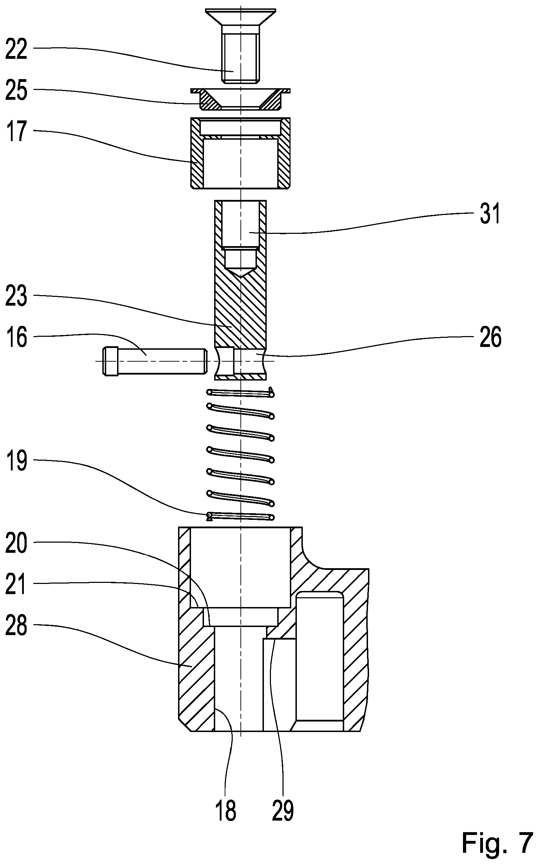

Fig. 7 zeigt die Verriegelungsanzeige in einer Explosionsdarstellung. Von oben nach unten sind gezeigt, die Schraube 22, die Kegelscheibe 15, das Anzeigeelement 17, das Sackloch 31 in einem oberen Ende eines Bauteil 31, die zweite Bohrung 16, in der der erste Stift 16 aufgenommen ist, die erste Feder 19, der zweite Absatz 21, der erste Absatz 20, die axial durch das Bauteil 28 verlaufende erste Bohrung 18 sowie der Durchbruch 29.

Die Erfindung realisiert auf diese Art und Weise eine Verschlusskappe mit einer Verriegelungsanzeige, die dem Nutzer zuverlässig und auch unter schwierigen Lichtverhältnissen den verriegelten Zustand der Verschlusskappe anzeigt.

Es versteht sich, dass das Vorstehende verschiedene Ausführungsbeispiele veranschaulicht
und dass die Erfindung durch die beigefügten Ansprüche definiert ist. Ein Fachmann wird erkennen, dass die beispielhaften Ausführungsformen modifiziert werden können und dass verschiedene Merkmale der beispielhaften Ausführungsformen kombiniert werden können, um andere Ausführungsformen als die hierin beschriebenen zu schaffen, ohne vom

Umfang der vorliegenden Erfindung abzuweichen, wie durch die angehängten Ansprüche definiert wird. Die Federn, die das Anzeigeelement bzw. das Ölsieb in einer Richtung vorspannt, kann beispielsweise eine Schraubenfeder sein, wie dargestellt ist, sie können aber auch irgendein anderes elastisches Element, wie beispielsweise ein Gummielement, sein.

Wie hierin verwendet, ist der Begriff "umfassend" oder "umfasst" offen zu verstehen und umfasst ein oder mehrere spezifische Merkmale, Elemente, Schritte, Komponenten oder Funktionen, schließt jedoch das Vorhandensein oder Hinzufügen von einem oder mehreren anderen Merkmalen, Elementen, Schritten, Komponenten, Funktionen oder Gruppen davon nicht aus.

### Bezugszeichen

- 1: Verschlusskappe
- 2: Verriegelungsanzeige
- 3: Öleinfüllstutzen
- 4: Gehäuse, hülsenförmig
- 5: Außengewinde
- 6: obere Öffnung
- 7: untere Öffnung
- 8: Ölsieb, oil strainer
- 9: zweites Federelement, Feder, Schraubendruckfeder
- 10: erster Vorsprung
- 11: zweiter Vorsprung
- 12: tellerrandähnlicher Abschluss
- 10a: Vorsprung, radial nach innen,
- 11a: Hülse
- 11b: Bund
- 12a: Anpresselement, Scheibe
- 13: erster Abschnitt
- 14: zweiter Abschnitt
- 15: zweiter Führungsabschnitt, Schlitz
- 16: zweites Führungselement, Stift, Knopf
- 17: Anzeigeelement, hülsenförmig
- 18: Bohrung
- 19: erstes Federelement, Feder
- 20: erster Absatz, vertieft, plan
- 21: zweiter Absatz, vertieft, plan
- 22: Schraube
- 23: Bauteil, zylinderförmig
- 24: Anlagefläche
- 25: Kegelscheibe
- 26: zweite Bohrung
- 27: erstes Führungselement, Stift, Knop
- 28: zweites Bauteil
- 29: Durchbruch
- 30: erster Führungsabschnitt, Schlitz
- 31: Sackloch
- 97: Achse
- 98: Steckrichtung
- 99: Drehrichtung
- α: Winkel
- A: Ausschnitt
- B: Ausschnitt
- C: Ausschnitt
- D: Ausschnitt

## Patentansprüche

1. Öleinfüllstutzen (3) mit Verschlusskappe (1), umfassend
- eine mit der Verschlusskappe (1) verbundene Verriegelungsanzeige (2) mit einem Anzeigeelement (17), wobei das Anzeigeelement (17) an einem ersten Federelement (19) gelagert ist,
- ein Bajonettverschlusssystem das ausgebildet ist, die Verschlusskappe (1) mit einem Gehäuse (4) des Öleinfüllstutzens (3) gegen die Kraft eines zweiten Federelements (9) zu verbinden, wobei das zweite Federelement (9) innerhalb des Gehäuses (4) angeordnet ist,
- wobei die zwei Federelemente (9, 19) parallel zueinander geschaltet sind,
- wobei die Verschlusskappe (1), das Gehäuse (4) und das Anzeigenelement (17) derart konfiguriert sind, dass
- das Anzeigeelement (17) unter Aufbringung einer von einem Nutzer zugeführten Kraft gegen die Kraft der beiden Federelemente (9, 19) von einer ersten Position in eine zweite Position überführbar ist und mit der Kraft der beiden Federelemente (9, 19) von der zweiten Position in die erste Position überführbar ist,
- das Anzeigeelement (17) in einer der beiden Positionen einen verriegelten Zustand und in der anderen der beiden Positionen einen nicht verriegelten Zustand der Verschlusskappe (4) anzeigt, und
- wobei ein Mechanismus vorgesehen ist, der die Bajonettverbindung und damit das Anzeigeelement (17) in der verriegelten Position sichert.

2. Öleinfüllstutzen mit Verschlusskappe nach Anspruch 1, wobei das Anzeigeelement (17) in der zweiten Position den verriegelten Zustand und in der ersten Position den nicht verriegelten Zustand der Verschlusskappe anzeigt.

3. Öleinfüllstutzen mit Verschlusskappe nach Anspruch 1 oder 2, wobei das Anzeigeelement (17) und das erste Federelement (19) zumindest teilweise innerhalb eines zylinderförmigen Abschnitts (28) der Verschlusskappe (4) geführt sind, wobei der zylinderförmige Abschnitt einen Durchbruch (29) aufweist, durch den ein mit dem Anzeigeelement (17) wirkverbundenes Führungselement (27) ragt, wobei das Führungselement (27) ausgebildet ist, in einen an einer Außenseite einer Gehäusewandung des Öleinfüllstutzens angeordneten Führungsabschnitt (30) zu greifen.

4. Öleinfüllstutzen mit Verschlusskappe nach Anspruch 3, wobei das erste Federelement (19) axial zwischen einer Anlagefläche des Anzeigeelements (17) und dem Führungselement (27) angeordnet ist.

5. Öleinfüllstutzen mit Verschlusskappe nach Anspruch 3 oder 4, wobei das erste Federelement (19) zumindest teilweise radial zwischen dem Anzeigenelement (17) und einem Bauteil (23) angeordnet ist, welches das Führungselement (27) teilweise aufnimmt.

6. Öleinfüllstutzen mit Verschlusskappe nach einem der Ansprüche 3 bis 5, wobei der zylinderförmige Abschnitt eine Bohrung (18) mit zwei vertieften, planen Absätzen (20, 21) aufweist, wobei ein erster Absatz (20) einen kleineren Durchmesser als ein zweiter Absatz (21) aufweist, wobei das erste Federelement (19) auf dem ersten Absatz (20) abgestützt ist.

7. Öleinfüllstutzen mit Verschlusskappe nach einem der Ansprüche 5 oder 6, wobei das Anzeigeelement (17) und das Bauteil (23) mittels einer Schraubverbindung verbunden sind.

## Claims

1. Oil filler neck (3) with closure cap (1), comprising
- a locking-state indicator (2) which is connected to the closure cap (1) and which has an indicator element (17), wherein the indicator element (17) is mounted on a first spring element (19),
- a bayonet closure system which is configured to connect the closure cap (1) to a housing (4) of the oil filler neck (3) counter to the force of a second spring element (9), wherein the second spring element (9) is arranged within the housing (4),
- wherein the two spring elements (9, 19) are connected in parallel with respect to one another,
- wherein the closure cap (1), the housing (4) and the indicator element (17) are configured in such a way that
- the indicator element (17), through application of a force supplied by a user, can be transferred from a first position into a second position counter to the force of the two spring elements (9, 19) and can be transferred from the second position into the first position with the force of the two spring elements (9, 19),
- the indicator element (17) indicates in one of the two positions a locked state, and in the other of the two positions an unlocked state, of the closure cap (4), and
- wherein provision is made of a mechanism which secures the bayonet connection and thus the indicator element (17) in the locked position.

2. Oil filler neck with closure cap according to Claim 1, wherein the indicator element (17) indicates in the second position the locked state, and in the first position the unlocked state, of the closure cap.

3. Oil filler neck with closure cap according to Claim 1 or 2, wherein the indicator element (17) and the first spring element (19) are guided at least partially within a cylindrical portion (28) of the closure cap (4), wherein the cylindrical portion has an aperture (29) through which a guide element (27) operatively connected to the indicator element (17) projects, wherein the guide element (27) is configured to engage into a guide portion (30) arranged on an outer side of a housing wall of the oil filler neck.

4. Oil filler neck with closure cap according to Claim 3, wherein the first spring element (19) is arranged axially between the guide element (27) and an abutment surface of the indicator element (17).

5. Oil filler neck with closure cap according to Claim 3 or 4, wherein the first spring element (19) is, at least partially, arranged radially between the indicator element (17) and a component (23) which partially receives the guide element (27).

6. Oil filler neck with closure cap according to one of Claims 3 to 5, wherein the cylindrical portion has a bore (18) with two recessed planar shoulders (20, 21), wherein a first shoulder (20) has a smaller diameter than a second shoulder (21), wherein the first spring element (19) is supported on the first shoulder (19).

7. Oil filler neck with closure cap according to either of Claims 5 and 6, wherein the indicator element (17) and the component (23) are connected by means of a screw connection.

## Revendications

1. Tubulure de remplissage d'huile (3) munie d'un bouchon de fermeture (1), comprenant :
- un indicateur de verrouillage (2) relié au bouchon de fermeture (1), muni d'un élément indicateur (17), l'élément indicateur (17) étant monté sur un premier élément ressort (19),
- un système de fermeture à baïonnette qui est configuré pour relier le bouchon de fermeture (1) à un boîtier (4) de la tubulure de remplissage d'huile (3) à l'encontre de la force d'un deuxième élément ressort (9), le deuxième élément ressort (9) étant agencé à l'intérieur du boîtier (4),
- les deux éléments ressorts (9, 19) étant connectés en parallèle l'un de l'autre,
- le bouchon de fermeture (1), le boîtier (4) et l'élément indicateur (17) étant configurés de telle sorte que
- l'élément indicateur (17) peut être transféré d'une première position dans une deuxième position par application d'une force exercée par un utilisateur à l'encontre de la force des deux éléments ressorts (9, 19), et peut être transféré de la deuxième position dans la première position avec la force des deux éléments ressorts (9, 19),
- l'élément indicateur (17) indique dans une des deux positions un état verrouillé et dans l'autre des deux positions un état non verrouillé du bouchon de fermeture (4), et
- un mécanisme étant prévu, qui bloque la liaison à baïonnette et par conséquent l'élément indicateur (17) dans la position verrouillée.

2. Tubulure de remplissage d'huile munie d'un bouchon de fermeture selon la revendication 1, l'élément indicateur (17) indiquant dans la deuxième position l'état verrouillé et dans la première position l'état non verrouillé du bouchon de fermeture.

3. Tubulure de remplissage d'huile munie d'un bouchon de fermeture selon la revendication 1 ou 2, l'élément indicateur (17) et le premier élément ressort (19) étant au moins partiellement guidés à l'intérieur d'une section de forme cylindrique (28) du bouchon de fermeture (4), la section de forme cylindrique comprenant une percée (29), à travers laquelle un élément de guidage (27) relié activement à l'élément indicateur (17) fait saillie, l'élément de guidage (27) étant configuré pour s'engager dans une section de guidage (30) agencée sur un côté extérieur d'une paroi de boîtier de la tubulure de remplissage d'huile.

4. Tubulure de remplissage d'huile munie d'un bouchon de fermeture selon la revendication 3, le premier élément ressort (19) étant agencé axialement entre une surface d'appui de l'élément indicateur (17) et l'élément de guidage (27).

5. Tubulure de remplissage d'huile munie d'un bouchon de fermeture selon la revendication 3 ou 4, le premier élément ressort (19) étant au moins partiellement agencé radialement entre l'élément indicateur (17) et un composant (23), que l'élément de guidage (27) reçoit partiellement.

6. Tubulure de remplissage d'huile munie d'un bouchon de fermeture selon l'une quelconque des revendications 3 à 5, la section de forme cylindrique comprenant un alésage (18) muni de deux épaulements plans en retrait (20, 21), un premier épaulement (20) présentant un plus petit diamètre qu'un deuxième épaulement (21), le premier élément ressort (19) s'appuyant sur le premier épaulement (20).

7. Tubulure de remplissage d'huile munie d'un bouchon de fermeture selon l'une quelconque des revendications 5 ou 6, l'élément indicateur (17) et le composant (23) étant reliés au moyen d'une liaison vissée.
